# DEMANDE DE BREVET EUROPEEN

(11) **EP 0 848 199 A1**
(43) Date de publication de la demande: **17.06.1998**
(21) Numéro de dépôt: 97402861.5
(22) Date de dépôt: 27.11.1997
(51) Int. Cl.: F16L 3/237

(54) **Dispositif de fixation d'au moins une canalisation de fluide sur un support**

(30) Priorité: 12.12.1996 FR 9615282
(71) Demandeur: HUTCHINSON, F-75008 Paris (FR)
(72) Inventeur: Perea, Cyrille, 45200 Montargis (FR)
(74) Mandataire: Ramey, Daniel

(57) **Abrégé**

Dispositif de fixation d'une ou plusieurs canalisations rigides (10,12) sur un support rigide (22), comprenant un bloc (16) de caoutchouc ou d'élastomère surmoulé sur les canalisations (10,12) et sur une patte de fixation (18) qui est séparée des canalisations (10,12) par une épaisseur de caoutchouc ou d'élastomère empêchant la transmission des vibrations et des bruits.

L'invention s'applique notamment à la fixation des canalisations de fluide sous pression dans un véhicule automobile.

## Description

L'invention concerne un dispositif de fixation d'au moins une canalisation de fluide sur un support, en particulier d'une canalisation rigide, par exemple métallique, sur un support rigide, par exemple métallique.

L'invention s'applique notamment, mais non exclusivement, à la fixation des canalisations d'un circuit hydraulique de direction assistée pour véhicule automobile, ainsi qu'à celle des tuyaux de freinage, de climatisation, de circulation d'huile, de carburant.

Les canalisations rigides d'un circuit hydraulique de direction assistée d'un véhicule automobile comprennent des tubes métalliques qui sont fixés sur le bloc-moteur par l'intermédiaire de pattes métalliques dont une partie est en général brasée ou soudée sur les tubes métalliques et dont une autre partie comporte un trou de passage d'une vis ou d'un boulon de fixation sur le bloc-moteur.

La fixation de ces pattes sur les tubes métalliques est relativement délicate et coûteuse, le brasage où la soudure impose d'utiliser un même métal pour les pattes et les tubes et la fixation métal sur métal permet la transmission des bruits et des vibrations entre les tubes et leur support.

La présente invention a notamment pour but d'éviter les inconvénients de ces moyens connus.

Elle a pour objet un dispositif de fixation d'une canalisation rigide sur un support rigide, qui constitue un filtre empêchant la transmission des vibrations et des bruits entre la canalisation et le support et qui soit également plus facile à réaliser et moins coûteux que les moyens connus précités.

Elle propose dans ce but un dispositif de fixation d'au moins une canalisation de fluide sur un support, en particulier d'une canalisation rigide, par exemple métallique, sur un support rigide, par exemple métallique, caractérisé en ce qu'il comprend au moins une patte de fixation dont une partie est noyée dans un bloc d'une matière telle que du caoutchouc ou un élastomère surmoulé sur la canalisation précitée, ladite patte étant séparée de la canalisation à l'intérieur du bloc par une épaisseur de la matière précitée empêchant la transmission des vibrations et des bruits de la canalisation au support.

La fixation de la patte sur la canalisation par l'intermédiaire d'un bloc surmoulé en caoutchouc ou en élastomère est moins coûteuse et plus facile à réaliser qu'un brasage de la patte de fixation sur la canalisation. En outre, le caoutchouc ou l'élastomère du bloc surmoulé empêche ou réduit très fortement la transmission des vibrations et des bruits entre la canalisation et la patte de fixation sur le support. En particulier, lorsque la canalisation fait partie d'un circuit hydraulique de direction assistée d'un véhicule automobile, on empêche la transmission au support des vibrations et des bruits caractéristiques qui sont générés dans le circuit de direction assistée, ce qui permet de fixer les canalisation de ce circuit, non plus sur le bloc moteur comme cela se pratique usuellement, mais sur un longeron ou un autre élément du châssis du véhicule, ce qui peut simplifier la fixation de ces canalisations dans le compartiment moteur et qui était auparavant impossible ou à éviter, en raison d'une remontée importante de bruits et de vibrations dans le véhicule.

Un autre avantage du dispositif de fixation selon l'invention est que le bloc surmoulé en caoutchouc ou en élastomère est moins encombrant et moins volumineux que les dispositifs connus, ce qui est particulièrement favorable dans le cas de la fixation de canalisations dans un compartiment moteur.

En outre, ce bloc de caoutchouc ou d'élastomère peut être surmoulé sur deux canalisations différentes ce qui permet, d'une part, de fixer ces canalisations sur un support au moyen d'un même élément et, d'autre part, de les positionner et de les orienter l'une par rapport à l'autre sans devoir utiliser de moyens supplémentaires.

En particulier, ces deux canalisations peuvent être constituées par un conduit d'amenée et par un conduit de retour de fluide ou encore par une canalisation haute pression dans et une canalisation basse pression, par exemple dans un circuit de direction assistée.

Selon une autre caractéristique de l'invention, la partie de la canalisation recouverte par la matière du bloc surmoulé comporte des moyens d'adhésion à ladite matière ou d'ancrage dans cette matière, tels par exemple qu'un film d'adhésif, un méplat, des stries ou un moletage, un élément en saillie, etc...

On assure ainsi une immobilisation en translation et en rotation de la canalisation dans le bloc surmoulé.

De même, la partie de la patte de fixation noyée dans le bloc surmoulé comporte des moyens d'ancrage dans la matière de ce bloc, tels par exemple des trous, des orifices, des cavités, des rainures ou des coudes.

L'invention s'applique dans le domaine automobile comme indiqué ci-dessus, et également dans le bâtiment, l'électro-ménager, l'industrie chimique et dans tout autre domaine lorsqu'il faut fixer sur un support rigide des canalisations de fluides susceptibles d'engendrer des bruits et des vibrations.

L'invention sera mieux comprise et d'autres caractéristiques, détails et avantages de celle-ci ressortiront plus clairement à la lecture de la description qui suit, faite à titre d'exemple en référence aux dessins annexés dans lesquels :
la figure 1 représente schématiquement deux canalisations munies de dispositifs de fixation selon l'invention,
la figure 2 est une vue schématique en coupe transversale, à plus grande échelle, d'un dispositif de fixation selon l'invention,
la figure 3 est une vue schématique partielle d'une canalisation comportant des moyens d'ancrage dans un bloc surmoulé.

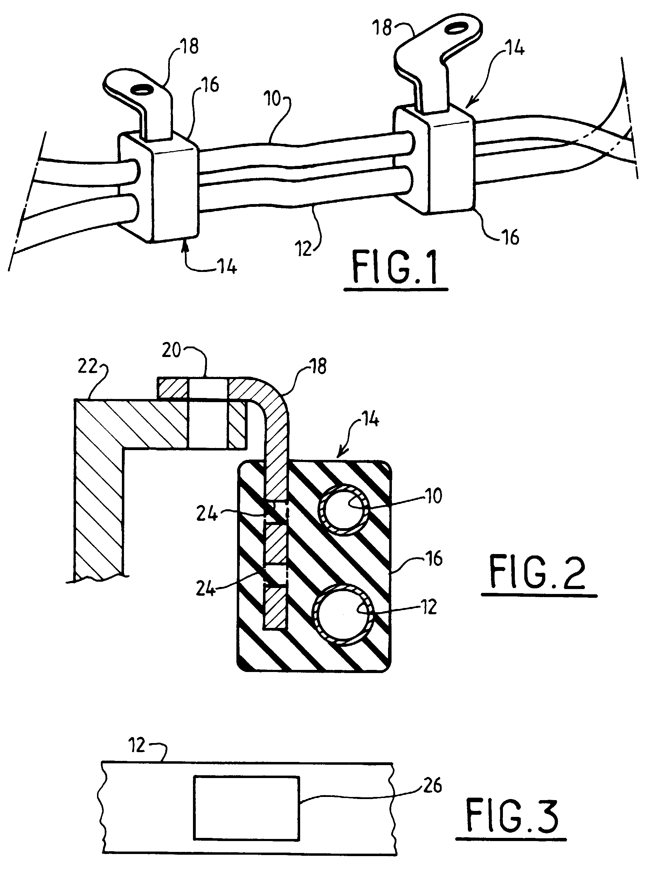

On se référe d'abord à la figure 1 qui représente schématiquement deux canalisations 10 et 12, telles qu'une canalisation haute pression et une canalisation basse pression d'un circuit de direction assistée de véhicule automobile, munies de deux dispositifs de fixation selon l'invention désignés généralement par la référence 14 et permettant de fixer les canalisations 10 et 12 sur un support commun (non représenté en figure 1) et de les maintenir l'une par rapport à l'autre dans des positions prédéterminées, ces deux canalisations pouvant avoir des diamètres identiques ou différents et être sensiblement parallèles sur une partie de leur longueur comme on le voit en figure 1, en prenant ensuite des directions différentes.

Chaque dispositif de fixation 14 est essentiellement constitué (figure 2) d'un bloc 16 d'une matière élastiquement déformable telle que du caoutchouc ou un élastomère, qui enrobe complètement les canalisations 10 et 12 en les maintenant à distance prédéterminée l'une de l'autre et dans une orientation déterminée l'une par rapport à l'autre et qui enrobe également une partie d'une patte de fixation 18 dont une autre partie s'étend à l'extérieur du bloc 14 et comporte par exemple un orifice 20 de passage d'une vis ou d'un boulon de fixation sur le support 22 (la fixation de la patte 18 sur le support 22 pouvant se faire par tout moyen approprié connu dans la technique).

La partie de la patte 18 qui est noyée dans le bloc 16 est à distance des canalisations 10 et 12 et en est séparée par une épaisseur de matière suffisante pour empêcher ou au moins réduire très fortement la transmission au support 22 des vibrations et des bruits susceptibles d'être générés dans les canalisations 10 et 12.

Le bloc 16 constitue donc simultanément un moyen de fixation de la patte 18 sur les canalisations 10 et 12, un moyen de liaison entre ces deux canalisations, et un filtre à l'égard des bruits et des vibrations, tout en autorisant, par déformation élastique, un faible débattement des canalisations par rapport au support 22 et en absorbant des tolérances de fabrication du bloc 16 et de la patte 18 et des tolérances de montage des canalisations dans un espace relativement étroit tel que le compartiment moteur d'un véhicule automobile.

La patte de fixation 18 comprend des moyens assurant son ancrage dans le bloc surmoulé 16, ces moyens pouvant prendre un grand nombre de formes diverses, mais étant constitués simplement par des orifices 24 qui sont remplis de la matière du bloc 16 lors du surmoulage de celui-ci.

On peut également prévoir dans la patte 18 des cavités, des rainures, des coudes, etc... ayant également une fonction d'ancrage et d'immobilisation de la patte 18 dans le bloc 16.

De même, des moyens sont de préférence prévus pour immobiliser en translation et en rotation les canalisations 10 et 12 dans le bloc 16, ces moyens comprenant par exemple un ou plusieurs méplats 26 formés dans la surface extérieure des canalisations 10 et 12, ou bien des stries, un moletage, un bossage, etc...

On peut également déposer un film d'un adhésif approprié sur les parties des canalisations 10 et 12 destinées à être noyées dans la matière du bloc 16.

Dans le cas le plus général, les pattes de fixation sont métalliques, mais elles peuvent également être réalisées en une matière plastique ou synthétique appropriée.

Les blocs surmoulés 16 sont réalisés en caoutchouc ou en un élastomère tel que du néoprène, un caoutchouc butyle, un EPDM ou analogue.

La fabrication des dispositifs de fixation selon l'invention est simple :
il suffit de réaliser un petit moule de surmoulage à la forme du bloc 16 et comprenant des moyens de positionnement des canalisations 10 et 12 et de la patte de fixation 18.

Le dispositif selon l'invention présente de nombreux avantages par rapport à la technique antérieure :
- le coût de réalisation d'un moule de surmoulage est très nettement inférieur à celui de l'outillage utilisé pour fabriquer des pattes brasées sur des canalisations métalliques,
- la configuration des pattes de fixation est simplifiée (en moins en ce qui concerne leur partie noyée dans le bloc surmoulé 16),
- on peut réaliser les pattes 18 en une matière différente de celle des canalisations 10 et 12,
- on peut fixer les pattes 18 sur un support rigide, par exemple métallique, sans risque de transmission des bruits et des vibrations générés dans les canalisations,
- on peut relier entre elles des canalisations de natures différentes et de diamètres différents,
- on peut utiliser le dispositif de fixation pour assurer un écartement entre les canalisations et leur orientation relative,
- les blocs surmoulés 16 sont moins volumineux et moins encombrants que les moyens connus de la technique antérieure.

## Revendications

1. Dispositif de fixation d'au moins une canalisation de fluide sur un support, en particulier d'une canalisation rigide, par exemple métallique, sur un support rigide, par exemple métallique, caractérisé en ce qu'il comprend au moins une patte de fixation (18) dont une partie est noyée dans un bloc (16) d'une matière telle que du caoutchouc ou un élastomère surmoulé sur la canalisation (10,12) précitée, ladite patte (18) étant séparée de la canalisation à l'intérieur du bloc (16) par une épaisseur de la matière précitée empêchant la transmission de vibrations et de bruits de la canalisation au support (22).

2. Dispositif selon la revendication 1, caractérisé en ce que la partie de la patte (18) noyée dans le bloc (16) comporte des moyens d'ancrage dans la matière du bloc, tels par exemple que des trous (24), des cavités, des rainures ou des coudes.

3. Dispositif selon la revendication 1 ou 2, caractérisé en ce que la partie de la canalisation (10,12) recouverte par la matière du bloc surmoulé (16) comporte des moyens d'adhésion à cette matière ou d'ancrage dans cette matière tels par exemple qu'un film d'adhésif, un méplat, des stries ou un moletage ou analogue.

4. Dispositif selon l'une des revendications précédentes, caractérisée en ce que la patte (18) est métallique ou en matière plastique.

5. Dispositif selon l'une des revendications précédentes, caractérisé en ce que le bloc précité est surmoulé sur au moins deux canalisations (10,12) sensiblement parallèles ou orientées de façon prédéterminée l'une par rapport à l'autre.

6. Dispositif selon l'une des revendications précédentes, caractérisé en ce que le bloc (16) est surmoulé sur une ou plusieurs canalisations de fluide hydraulique basse pression ou haute pression, telles par exemple que des canalisations métalliques d'un circuit hydraulique de direction assistée dans un véhicule automobile.

7. Dispositif selon la revendication 6, caractérisé en ce que le bloc (16) est fixé par la patte (18) sur un élément du châssis du véhicule, par exemple sur un longeron.

8. Dispositif selon l'une des revendications précédentes, caractérisé en ce que les canalisations (10,12) précitées sont des tuyaux de climatisation, de carburant, de freinage ou de circulation d'huile pour véhicule automobile.
